# FASCICULE DE BREVET EUROPEEN

(11) **EP 0 911 631 B1**
(45) Date de publication et mention de la délivrance du brevet: **04.05.2005**
(21) Numéro de dépôt: 99100556.2
(22) Date de dépôt: 12.12.1991
(51) Int. Cl.: G01N 27/447, B01D 57/02

(54) **Dispositif pour l'application d'échantillons biologiques sur une plaque d'électrophorèse**
Vorrichtung zum Aufbringen von biologischen Proben auf eine Elektrophoreseplatte
Apparatus for the application of biological samples to an electrophoresis plate

(30) Priorité: 04.01.1991 FR 9100092
(43) Date de publication de la demande: 28.04.1999
(62) Demande divisionnaire de: 91403377.4
(73) Titulaire: SEBIA, 92130 Issy-Les-Moulineaux (FR)
(72) Inventeur: Bellon, Franck, 91160 Longjumeau (FR)
(74) Mandataire: Desaix, Anne

(56) Documents cités:
- FR-A- 2 347 674
- GB-A- 1 446 125
- US-A- 3 855 846
- US-A- 3 930 973
- US-A- 4 334 879

## Description

L'invention a pour objet un dispositif pour l'application d'échantillons biologiques sur une plaque d'électrophorèse et avantageusement sur un gel d'électrophorèse.

Les techniques d'électrophorèse de zone sur gel d'agarose ont pour but de fractionner les constituants protéiques d'un échantillon biologique tel que sérum, urine, liquide céphalo-rachidien, etc, en les soumettant à l'action d'un champ électrique dans un milieu gélifié et contenant une solution tampon. A un pH déterminé, généralement basique, les protéines qui sont des molécules amphotères s'ionisent et vont se séparer selon leur charge respective. La finesse des bandes obtenues après électrophorèse et donc le pouvoir de résolution de la technique dépend principalement de la finesse du dépôt.

En effet, si en isoélectrofocalisation, en isotachophorése ou en électrophorèse en gradient d'acrylamide ou encore en électrophorèse en gel d'acrylamide (par utilisation d'un "stacking gel"), on peut obtenir une focalisation des fractions par l'électrophorèse elle-même, en électrophorèse de zone, par exemple sur gel d'agarose seul un dépôt très fin permet d'obtenir des fractions très focalisées.

Pour effectuer les dépôts en vue de l'électrophorèse, on peut utiliser des peignes en matière plastique dont les dents portent une gorge qui permet de récupérer une goutte d'échantillon biologique d'un volume d'environ 0,3 à 2 µl, mais d'une part la goutte est d'une dimension telle qu'elle ne permet généralement pas un dépôt suffisamment fin et d'autre part, selon le type d'analyse, il est parfois nécessaire d'effectuer au préalable une dilution de l'échantillon à analyser, pour ne pas déposer des quantités d'échantillon trop importantes.

Pour effectuer un dépôt en vue de l'électrophorèse, on peut aussi utiliser un masque de dépôt comportant des fentes fines (d'environ 0,3 à environ 0,5 mm) qui permet d'obtenir une bonne focalisation du dépôt nécessaire à une image satisfaisante. Néanmoins, l'utilisation de ce masque avec dépôt des échantillons sur les fentes est difficilement automatisable. Par ailleurs, les applicateurs "automatiques" actuels ne permettent pas d'obtenir une finesse de dépôt équivalente à celle obtenue avec un dépôt manuel effectué dans les fentes fines des masques.

De plus, en raison de la grosseur relativement importante des gouttes, on obtient des bandes assez larges, ce qui rend la séparation des protéines difficile.

Sur gel d'agarose, on peut également utiliser des gels moulés comportant des cuvettes, et, dans ce cas, la seringue qui sert au dépôt de l'échantillon doit bien cibler la cuvette. La manipulation est effectuée en général avec succès si la taille des cuvettes est suffisamment grande. Ainsi, pour une cuvette de largeur supérieure ou égale à environ 1 mm, le dispositif est automatisable, mais la résolution n'est pas suffisante. Si la taille des cuvettes est suffisamment petite pour obtenir une bonne résolution, alors le dispositif n'est plus automatisable.

L'invention a pour objet de remédier à ces inconvénients en proposant un dispositif pour l'application d'échantillons biologiques qui, d'une part, permet d'obtenir une finesse de dépôt suffisante pour obtenir une haute résolution et, d'autre part, est automatisable, et qui finalement permet de déposer des quantités modulables d'échantillon (quantités plus ou moins importantes d'échantillon à volonté). L'invention a également pour objet de fournir un dispositif pour l'application d'échantillons biologiques, qui soit de prix modéré.

L'invention a pour objet un dispositif pour l'application d'échantillons biologiques sur une plaque d'électrophorèse, notamment gel d'électrophorèse,
caractérisé en ce qu'il comprend :
- un ou plusieurs éléments plans, en matériau poreux dans lequel un échantillon biologique peut diffuser, ces éléments plans étant découpés dans le prolongement du plan et sur le bord d'une membrane plane poreuse et en saillie par rapport à ladite membrane poreuse, - ces éléments étant dénommés ci-après "éléments en saillie" -, la partie non engagée dans la membrane poreuse des éléments en saillie, espacés les uns des autres, comportant une extrémité libre, les susdits éléments en saillie étant tels qu'ils ont tous au moins un point susceptible d'être mis en contact avec la surface plane de la plaque d'électrophorèse afin de déposer sur ladite plaque, par diffusion, un ou plusieurs échantillons biologiques, chaque échantillon biologique étant préalablement déposé sur un élément des éléments en saillie, ces différents points étant susceptibles d'être mis simultanément en contact avec la surface de ladite plaque selon un alignement, lorsque la susdite membrane poreuse est disposée dans un plan incliné ou perpendiculaire par rapport à la surface de la susdite plaque, des moyens d'humidification des éléments en saillie, fixés de façon réversible ou non à la susdite membrane poreuse.

Le dispositif de l'invention permet d'effectuer des dépôts d'échantillons biologiques, notamment sur gel d'agarose, d'acrylamide ou sur membrane d'acétate de cellulose.

La membrane poreuse et les éléments en saillie ont avantageusement une épaisseur d'environ 50 µm à environ 200 µm, et de préférence d'environ 100 à environ 150 µm.

Le dispositif de l'invention est tel qu'il permet d'effectuer le dépôt d'un échantillon biologique sans transfert de liquide, mais par diffusion (des constituants contenus dans l'échantillon biologique) entre deux milieux solides qui sont respectivement l'ensemble des éléments en saillie et la plaque d'électrophorèse, chacun étant à saturation de liquide pour éviter le transfert de l'un vers l'autre. Dans ces conditions, des dépôts très fins peuvent être obtenus, notamment si la zone de contact entre l'extrémité des éléments en saillie (c'est-à-dire la section des éléments en saillie) et la plaque possède une dimension très réduite.

Le dispositif pour l'application d'échantillons biologiques est de préférence destiné à l'application desdits échantillons sur un gel d'électrophorèse.

L'échantillon biologique est constitué par une solution contenant des composants à déterminer. A titre d'exemple, on peut citer le sérum, l'urine, etc...

Le dispositif de l'invention comporte donc une membrane poreuse, dont les pores peuvent absorber l'échantillon, et peuvent absorber également éventuellement un liquide d'humidification.

L'échantillon biologique déposé, de préférence à proximité de l'extrémité d'un élément en saillie, s'absorbe par capillarité dans les pores de la membrane poreuse jusqu'à un certain niveau (appelé "front de l'échantillon") dépendant du volume déposé, de la taille de l'élément en saillie, de son épaisseur et du taux de porosité du matériau dont est constitué l'élément en saillie.

Le liquide d'humidification est incorporé dans la membrane poreuse, au-dessus du front de l'échantillon biologique. Si le liquide d'humidification est introduit au moins à saturation et de préférence en excès dans la membrane poreuse, par rapport à la capacité d'absorption de la membrane poreuse, il migre par capillarité jusqu'au niveau atteint par l'échantillon et il maintient l'échantillon là où ce dernier s'est absorbé.

On dira que le matériau poreux se trouve en saturation de liquide si la totalité du volume de ses pores est occupée par du liquide. Ainsi, une membrane poreuse avec un taux de porosité de 60% est à saturation quand elle contient par rapport à son volume 60% de liquide et une membrane poreuse de taux de porosité 90% est à saturation quand elle contient 90% de liquide.

Si, de plus, on provoque une évaporation de la solution contenant l'échantillon, le liquide d'humidification qui sature la membrane poreuse et qui est introduit avantageusement en excès par rapport à la capacité d'absorption de la membrane poreuse va remplacer la solution de l'échantillon qui s'est évaporée, ce qui va refouler l'échantillon vers l'extrémité des éléments en saillie et va entraîner sa concentration.

La présence du liquide d'humidification dans la membrane en matériau poreux crée un flux dirigé de la membrane poreuse vers les extrémités des éléments en saillie, ce qui a pour fonction de repousser l'échantillon biologique vers les extrémités respectives des éléments en saillie.

L'échantillon biologique, déposé de préférence à l'extrémité d'un élément en saillie, diffuse, à partir de l'extrémité de l'élément en saillie, sur une hauteur allant d'environ 1 à environ 10 mm, notamment d'environ 3 mm à environ 5 mm, la limite de cette hauteur constituant une ligne d'équilibre entre, d'une part, la diffusion de l'échantillon et, d'autre part, le refoulement créé par le liquide d'humidification.

Lorsque la distance du front de l'échantillon à l'extrémité des éléments en saillie se trouve réduite par suite du refoulement de l'échantillon par le liquide d'humidification, il y a concentration de l'échantillon. Dans un cas extrême, le front de l'échantillon peut se situer après la phase de concentration jusqu'à une distance de 0,5 ou 0,3 mm de l'extrémité des éléments en saillie, ce qui, pour un front initialement à 10 mm correspond à une concentration pouvant atteindre un facteur 20 ou 30.

Selon un mode de réalisation avantageux de l'invention, on opère dans des conditions telles que l'échantillon biologique ait subi une concentration à l'extrémité des éléments en saillie, cela permet d'utiliser des échantillons biologiques dilués sans étape préalable de concentration de l'échantillon.

En effet, la concentration de l'échantillon a lieu sur le dispositif de l'invention.

Par exemple, on provoque la diffusion des échantillons biologiques et leur concentration vers l'extrémité des éléments en saillie, en accélérant le flux créé par le liquide d'humidification, ce flux étant dirigé de la membrane poreuse vers l'extrémité des éléments en saillie sur lesquels sont déposés les échantillons biologiques, par évaporation accélérée du liquide de l'échantillon, par l'utilisation d'une ventilation d'air soit à température ambiante, soit à une température avantageusement inférieure ou égale à environ 40°C.

Cette concentration est variable suivant les types d'analyse envisagés. Le facteur de concentration peut être d'environ 1,2 à environ 3 pour le protéinogramme d'un sérum, d'un facteur d'environ 2 à environ 5, pour le lipidogramme d'un sérum, d'un facteur d'environ 10 à environ 30, pour l'analyse des protéines d'une urine ou d'un liquide céphalo-rachidien.

Le volume d'échantillon biologique déposé sur le gel d'électrophorèse varie de 0 à la totalité du volume d'échantillon biologique déposée sur l'extrémité des éléments en saillie.

Plus précisément, en ce qui concerne le volume d'échantillon biologique déposé sur un élément en saillie, il est tel que l'échantillon biologique s'étale à partir de l'extrémité de l'élément en saillie jusqu'au niveau appelé front de l'échantillon situé à une distance de l'extrémité de l'élément en saillie de 1 mm à 10 mm, notamment d'environ 3 mm à environ 10 mm. Cette distance dépend, comme indiquée ci-dessus, également de la longueur de l'élément en saillie, de son épaisseur et du taux de porosité du matériau dont est constitué l'élément en saillie.

Pour des taux de porosité d'environ 50% à environ 90%, le volume du dépôt d'un échantillon biologique sur un élément en saillie est d'environ 0,05.10⁻² à environ 1.10⁻² µl/mm et par µm d'épaisseur du matériau poreux, de préférence d'environ 0,15.10⁻² à environ 0,5.10⁻² µm/mm et par µm d'épaisseur du matériau poreux.

En ce qui concerne le gel d'électrophorèse, celui-ci se trouve toujours à saturation de liquide selon la définition précédente puisque même s'il subit une déshydratation partielle, il y a effondrement des pores, c'est-à-dire diminution du volume des pores qui sont néanmoins toujours occupés par du liquide.

Dans le cas où le matériau poreux est à saturation du liquide, le passage à partir de l'extrémité des éléments en saillie sur le gel des substances contenues dans une partie du volume (déposé sur l'extrémité des éléments en saillie) de l'échantillon biologique se fait donc par diffusion, et non par transfert de la solution (contenant les substances à déterminer) que représente l'échantillon biologique.

Dès que le matériau poreux n'est pas en saturation de liquide, il va se produire, par un phénomène de capillarité, un transfert de liquide du gel vers le matériau poreux, ce qui va à l'encontre de la diffusion de ces espèces moléculaires dans le gel. Ce phénomène est d'autant plus important que le matériau poreux est plus éloigné de la saturation.

On peut évaluer qu'à partir du moment où la quantité de liquide imprégnant le matériau poreux est inférieure ou égale à 90% de la quantité de liquide l'imprégnant à saturation, plus aucun dépôt ne pourra être effectué.

Par commodité de langage, on désigne, dans ce qui précède et ce qui suit, par "quantité d'échantillons biologiques déposée sur la plaque ou sur le gel", la quantité de substances à analyser contenues dans une partie du volume de l'échantillon biologique déposé sur l'extrémité des éléments en saillie et qui a diffusé dans le gel.

Les quantités déposées sur le gel d'électrophorèse des substances à déterminer contenues dans une partie du volume de l'échantillon biologique doivent être, d'une part, telles que les substances à déterminer se retrouvent dans la plaque ou le gel en quantité suffisante pour que leur détection puisse être effectuée et, d'autre part, telles que les substances à déterminer ne soient pas supérieures à la quantité au-delà de laquelle la résolution devient insuffisante.

En ce qui concerne la quantité des substances à analyser, déposées sur la plaque ou le gel, elle dépend d'une part à la fois du temps de refoulement ou de concentration de l'échantillon biologique sur l'extrémité en saillie, et, d'autre part, de la durée d'application de l'extrémité de l'élément en saillie sur la plaque ou sur le gel.

Elle dépend également des substances à analyser.

A titre d'exemple pour la détermination de protéines contenues dans un sérum, les quantités à déposer sur le gel varient suivant la sensibilité du colorant utilisé et donc les temps de concentration de l'échantillon biologique à l'extrémité des éléments en saillie et d'application sur la plaque d'électrophorèse varient en fonction des colorants choisis pour effectuer la révélation des protéines recherchées.

Pour un colorant peu sensible, par exemple le rouge Ponceau, avant le dépôt, la phase de concentration par évaporation à l'air de la solution d'échantillon biologique sera par exemple de 5 minutes (échantillon concentré environ 1,8 fois) avec un temps d'application sur le gel d'une minute. Dans ces conditions, la quantité de substance à analyser déposée par mm est celle contenue dans environ 0,06 µl d'échantillon initial.

. Pour un colorant plus sensible, par exemple le noir amide, avant le dépôt, la phase de concentration par évaporation à l'air de la solution d'échantillon biologique sera par exemple de 2 minutes (échantillon concentré environ 1,3 fois) avec un temps d'application sur le gel de 30 secondes. Dans ces conditions, la quantité de substance à analyser déposée par mm est celle contenue dans environ 0,02 µl d'échantillon initial.

Pour un colorant encore plus sensible, par exemple le violet acide, avant le dépôt, la phase de concentration par évaporation à l'air de la solution d'échantillon biologique sera par exemple de 2 minutes (échantillon concentré environ 1,3 fois) avec un temps d'application sur le gel de 15 secondes. Dans ces conditions, la quantité de substance à analyser déposée par mm est celle contenue dans environ 0,01 µl d'échantillon initial.

A titre d'exemple, pour un lipidogramme, avant le dépôt, la phase de concentration par évaporation à l'air de la solution d'échantillon biologique sera par exemple de 10 minutes (échantillon concentré environ 2,7 fois) avec un temps d'application sur le gel d'environ 2 minutes. Dans ces conditions, la quantité d'échantillon déposée par mm est celle contenue dans environ 0,12 µl d'échantillon initial.

A titre d'exemple, pour une détermination d'isoenzymes de la LDH (Lacticodeshydrogenase), avant le dépôt, la phase de concentration par évaporation à l'air de la solution d'échantillon biologique sera par exemple de 6 minutes (échantillon concentré environ 2 fois) avec un temps d'application sur le gel de 2 minutes. Dans ces conditions, la quantité d'échantillon déposée par mm est celle contenue dans environ 0,1 µl d'échantillon initial.

En ce qui concerne la porosité, elle se définit par deux paramètres qui sont respectivement le taux de porosité, c'est-à-dire le rapport entre le volume du vide occupé par l'ensemble des pores et le volume total du matériau et d'autre part la taille des pores.

Le taux de porosité du matériau est d'environ 50% à environ 90%.

En ce qui concerne la taille des pores, elle est d'environ 0,2 µm à environ 20 µm, avantageusement d'environ 2 µm à environ avantageusement 10 µm et avantageusement d'environ 8 µm.

Si les pores sont trop petits, le refoulement et éventuellement la concentration à l'extrémité des éléments en saillie nécessite trop de temps. Si les pores sont trop gros, l'échantillon biologique siphonne au travers des pores (poussé par le liquide d'humidification) ; dans ce cas là, il y a transfert et non pas diffusion et il y a perte de finesse du dépôt.

Cependant, pour éviter le phénomène de siphonnage, on peut intervenir sur la viscosité du liquide d'humidification, par exemple en utilisant un polymère présentant avantageusement les mêmes caractéristiques que les polymères définis ci-après, à propos de la netteté du front de l'échantillon biologique.

En ce qui concerne le contact entre les extrémités des éléments en saillie et la plaque, il a lieu, lorsque l'angle entre la plaque et les extrémités en saillie est d'environ 45° à environ 90°, et avantageusement d'environ 90°.

En ce qui concerne l'humidification de la membrane poreuse, le liquide d'humidification peut être déposé à chaque utilisation du dispositif à l'aide de tout moyen de dépôt, tel qu'une pipette.

En ce qui concerne l'humidification, elle peut avoir lieu soit avant (dans la mesure où le front de liquide d'humidification n'a pas encore atteint la zone où doit se faire le dépôt de l'échantillon), soit de préférence après le dépôt de l'échantillon sur les extrémités des éléments en saillie.

Lors de la mise en contact des éléments en saillie avec le gel, il n'est pas nécessaire que la réserve de liquide ayant permis l'humidification et donc le refoulement de l'échantillon biologique (et éventuellement la concentration de l'échantillon biologique à l'extrémité des éléments en saillie), soit encore présente dans la mesure où le dépôt de l'échantillon sur le gel suit immédiatement la phase d'humidification ou, dans la mesure où le dépôt de l'échantillon sur le gel suit immédiatement l'humidification - éventuellement la concentration de l'échantillon à l'extrémité des éléments en saillie.

On peut, par exemple, dans un premier temps, immerger la partie opposée aux éléments en saillie dans une solution d'humidification située dans un réservoir indépendant du dispositif de l'invention, puis effectuer immédiatement après la mise en contact des extrémités des éléments en saillie ainsi traités sur le gel.

Cependant, des moyens spécifiques d'humidification sont fixés sur la membrane de façon réversible ou non. Ces moyens peuvent comprendre un matériau susceptible de recevoir le liquide d'humidification, ou comprendre un réservoir susceptible de contenir le liquide d'humidification.

Selon un mode de réalisation avantageux de l'invention, les moyens d'humidification sont situés au-dessus du voisinage du front de chaque échantillon biologique déposé sur chaque élément en saillie et avantageusement au-dessus du côté de la membrane poreuse solidaire des éléments en saillie.

La distance entre les moyens d'humidification et le front de chaque échantillon est d'environ 1 mm à environ 20 mm, avantageusement d'environ 2 mm.

Comme matériau susceptible de recevoir le liquide d'humidification, on peut utiliser un matériau susceptible d'être imprégné, tel qu'un matériau spongieux, par exemple de l'éponge naturelle ou synthétique, ou du papier filtre d'épaisseur suffisante, avantageusement d'environ 0,5 mm à environ 3 mm ou du gel d'agarose.

Le matériau spongieux susceptible d'être imprégné d'un liquide d'humidification est tel qu'il peut contenir une quantité de liquide allant d'environ 2 fois à environ 20 fois le poids dudit matériau. Ce matériau imprégné de liquide d'humidification peut également être un gel, par exemple gel d'agarose.

Selon un mode de réalisation avantageux de l'invention, chaque élément en saillie présente une longueur de contact avec le gel d'environ 1 mm à environ 200 mm, de préférence d'environ 1 mm à environ 40 mm, selon laquelle l'échantillon biologique est déposé sur le gel.

Selon un autre mode de réalisation de l'invention, la membrane poreuse a une forme quadrilatérale, notamment carrée ou trapézoïdale, avantageusement rectangulaire, dont l'un des côtés est solidaire des éléments en saillie. L'extrémité libre des susdits éléments en saillie est notamment constituée par des polygones tels que des triangles, des trapèzes, des rectangles, des carrés, des portions de disque ou des portions d'ellipse.

Les éléments en saillie sont avantageusement constitués par des bandelettes de forme carrée ou rectangulaire, espacées les unes des autres.

De façon avantageuse, ces bandelettes présentent une longueur de contact avec le gel d'environ 1 à environ 200 mm, notamment d'environ 1 à environ 40 mm, et sont espacées les unes des autres d'une distance au moins égale à environ 0,5 mm.

Les éléments en saillie sont obtenus par découpe de la membrane poreuse sur l'un de ses bords.

Selon un mode de réalisation avantageux de l'invention, la membrane poreuse et les éléments en saillie sont constitués par le même matériau poreux.

Le matériau de la membrane poreuse et les éléments en saillie sont avantageusement constitués de matériau hydrophile, tel que cellulose ou dérivé de la cellulose, comme les esters de cellulose (acétate de cellulose, propionate de cellulose, nitrate de cellulose ...) ou des esters mixtes de cellulose. Il peut également être constitué de nylon, ou d'un matériau hydrophobe tel que polyéthylène, polypropylène ou polycarbonate.

D'autres matières poreuses envisageables sont la cellulose régénérée, le fluorure de polyvinylidène, le polysulfone ou le polysulfone modifié.

Lorsque l'on veut réduire le temps d'absorption des échantillons ou du liquide d'humidification dans les pores de la membrane poreuse, soit que celle-ci soit insuffisamment hydrophile (comme par exemple avec certains nitrates de cellulose), soit quand elle possède une taille de pore très faible (par exemple inférieure à environ 0,5 µm, on a de préférence recours avant d'utiliser la membrane poreuse à l'incorporation d'un agent mouillant de nature et en quantité telles qu'il ne dénature pas les composants contenus dans l'échantillon à analyser. Cet agent mouillant est en quantité suffisante pour que l'échantillon déposé sur chaque élément en saillie puisse pénétrer par absorption dans le matériau poreux en un temps relativement court inférieur à environ 10 secondes. L'agent mouillant est constitué avantageusement par de la glycérine, du 1-3 butanediol ou des agents tensioactifs non chargés tels que le Triton X100®, le Tween® avantageusement à des concentrations d'environ 0,001% à environ 10%.

En ce qui concerne l'absorption par le matériau poreux du liquide d'humidification, l'utilisation d'un agent mouillant est particulièrement avantageuse lorsque les moyens d'humidification sont constitués par un matériau susceptible de recevoir le liquide d'humidification et susceptible de transférer le liquide d'humidification perpendiculairement à la membrane poreuse. C'est le cas où les moyens d'humidification sont appliqués de façon réversible ou non sur la membrane poreuse, cette application entraînant l'existence de zones qui ne sont pas humidifiées, ce qui crée des perturbations dans le processus de refoulement de l'échantillon biologique vers les extrémités des éléments en saillie.

Cependant, lorsque les moyens d'humidification sont constitués par un réservoir, situé au-dessus du bord de la membrane poreuse, opposé aux éléments en saillie, on peut ne pas utiliser d'agent mouillant (dans ce cas, le liquide est transféré parallèlement à la surface de la membrane poreuse).

Selon un autre mode de réalisation avantageux de l'invention, le dispositif comporte :
- des moyens de rigidification de la membrane poreuse,
- et/ou des moyens de fixation de la membrane poreuse sur un système automatisable d'application des échantillons biologiques.

Les moyens de rigidification de la membrane poreuse peuvent être constitués d'un support de rigidification de la membrane poreuse, dont la forme et les dimensions sont compatibles avec celles de la membrane poreuse et celles des éléments en saillie. Le maintien d'une partie de la membrane poreuse par le support de rigidification dans des conditions telles que le support ne gêne ni la mise en contact des éléments en saillie solidaires de la membrane poreuse avec la surface plane du gel d'électrophorèse ni le dépôt de l'échantillon biologique sur le gel d'électrophorèse.

Le support de rigidification peut être constitué de deux éléments entre lesquels une partie de la membrane s'insère.

Les moyens de fixation peuvent être constitués d'une pince ou tout équivalent technique susceptible de tenir la membrane poreuse, éventuellement rigidifiée par un support.

Les moyens de fixation peuvent être également tels qu'ils confèrent à la membrane une rigidité appropriée et être tels qu'ils sont susceptibles de comporter des moyens d'étanchéité permettant de constituer un réservoir susceptible d'humidifier la membrane poreuse.

A titre d'exemple, la membrane poreuse peut être insérée entre deux parties de matériau magnétique dont l'une au moins est souple afin d'assurer l'étanchéité, chacune des parties de matériau magnétique étant elle-même en contact avec un élément de support rigide.

Selon un autre mode de réalisation de l'invention, le dispositif de l'invention comporte :
- des moyens de rigidification, notamment support de rigidification, de la membrane poreuse, la forme et les dimensions des moyens de rigidification étant compatibles avec celles de la membrane poreuse et des éléments en saillie, de façon à permettre le maintien d'une partie au moins de la membrane poreuse par les moyens de rigidification dans des conditions telles que les moyens de rigidification ne gênent pas la mise en contact des éléments en saillie solidaires de la membrane poreuse avec la surface plane de la plaque d'électrophorèse et le dépôt de l'échantillon biologique sur la plaque d'électrophorèse,
- ce dispositif étant tel que, le cas échéant, outre la membrane poreuse, les moyens de rigidification comportent des moyens d'humidification des parties en saillie, ces moyens d'humidification étant avantageusement constitués
   - dans le cas de la membrane poreuse, par un matériau susceptible d'être imprégné d'un liquide d'humidification tel qu'un matériau spongieux fixé de façon réversible ou non sur ladite membrane,
   - dans le cas des moyens de rigidification,
   par un réservoir intégré dans lesdits moyens de rigidification ou amovible par rapport auxdits moyens, ou résultant d'un espace formé par la configuration d'une partie des moyens de rigidification et par une partie de la membrane poreuse, au voisinage du bord de la membrane poreuse opposé à celui qui comporte les éléments en saillie, ledit réservoir contenant une solution d'humidification, et des moyens d'étanchéité entre lui-même et la membrane poreuse ou
   par un matériau susceptible d'être imprégné d'un liquide d'humidification, tel qu'un matériau spongieux, amovible ou non par rapport aux moyens de rigidification,
   la solution d'humidification étant de l'eau ou une solution aqueuse, contenant avantageusement de la glycérine à raison de 0 à environ 50% en volume, ou une solution saline, telle qu'une solution tampon phosphate 0,15 M, tampon trisglycine 0,15 M, tampon citrate 0,15 M, ou une solution contenant NaCl, avantageusement 0,15 M, etc...

Lorsque le dispositif de l'invention comporte un support de rigidification, le réservoir peut être formé par la membrane poreuse et une partie du support de rigidification, ladite partie du support ayant une forme telle et un aménagement par rapport à la membrane tel qu'il y ait un espace au voisinage de la partie supérieure de la membrane, en contact avec la membrane, ledit espace étant susceptible de recevoir un liquide d'humidification.

Selon un mode de réalisation avantageux, la solution d'humidification contient avantageusement un polymère permettant de réduire les phénomènes de diffusion en retour de l'échantillon vers la partie de la membrane poreuse opposée aux éléments en saillie.

Dans la mise en oeuvre du dispositif de l'invention, lorsqu'on dépose de l'échantillon biologique sur l'extrémité des parties en saillie, certaines zones sont imprégnées avant d'autres par l'échantillon biologique, ce qui peut créer un front irrégulier de l'échantillon biologique déposé sur lesdites parties en saillie. Afin d'éviter que ces irrégularités ne s'accentuent lors de la phase de concentration par la solution d'humidification, on a recours à un polymère qui, de par sa viscosité a la fonction d'assurer la netteté du front de l'échantillon c'est-à-dire de rendre et de maintenir le front de l'échantillon biologique sensiblement rectiligne. Dans le cas où les éléments en saillie ont la forme de rectangle, le rôle du polymère est de rendre le front sensiblement parallèle au bord de l'extrémité desdits éléments en saillie.

De façon avantageuse, le polymère utilisé est un polymère hydrosoluble, de masse molaire élevée d'environ 2X10⁵ à environ 10⁷, tel que l'hydroxyéthylcellulose, le dextran, le polyacrylamide etc... à des concentrations suffisantes pour que le front de l'échantillon déposé sur les éléments en saillie soit sensiblement rectiligne et à des concentrations inférieures à celle au-delà de laquelle la solution d'humidification ne progresse plus en raison de l'effet de frein constitué par la viscosité. Le susdit polymère a une concentration avantageusement d'environ 0,05% à environ 10%.

Selon un autre mode de réalisation de l'invention, la membrane poreuse est une feuille d'acétate de cellulose, avantageusement rectangulaire ou carrée, dans laquelle les éléments en saillie sont constitués par des bandelettes espacées les unes des autres, situées sur l'un des côtés de la membrane, et le support de rigidification comporte un réservoir intégré audit support.

Selon un autre mode de réalisation de l'invention, le dispositif de l'invention comporte :
- une membrane poreuse constituée par une feuille de papier, avantageusement carrée ou rectangulaire, dans laquelle les éléments en saillie sont constitués de bandelettes situées sur l'un des côtés de la membrane poreuse et espacées les unes des autres,
- un support de rigidification,
- un matériau spongieux susceptible d'être fixé de façon amovible ou non sur la membrane poreuse ou sur le support de rigidification.

Selon un autre mode de réalisation de l'invention, le dispositif de l'invention comporte :
- une membrane poreuse constituée par une feuille de papier, avantageusement carrée ou rectangulaire, dans laquelle les éléments en saillie sont constitués par des bandelettes espacées les unes des autres, situées sur l'un des côtés de la membrane,
- un support de rigidification,
- un matériau spongieux, fixé de façon amovible ou non sur la susdite membrane poreuse.

L'invention concerne également un dispositif dans lequel le volume du dépôt d'un échantillon biologique sur un élément en saillie est d'environ 0,05×10⁻² à environ 1×10⁻² µl/mm, par µm d'épaisseur du matériau poreux, de préférence d'environ 0,15 à environ 0,5×10⁻² µl/mm, pour une porosité du matériau poreux d'environ 50% à environ 90%, et le volume du dépôt de l'échantillon bioiogique sur la plaque d'électrophorèse est suffisant pour que la détection des composants dans un échantillon puissent être détectés et inférieur à une valeur au-delà de laquelle la résolution est insuffisante.

Selon un autre mode de réalisation de l'invention, le dispositif comprend :
- un ensemble d'éléments en saillie constitués par des polygones tels que des triangles, des trapèzes, des rectangles, des carrés, des portions de disque ou des portions d'ellipse, ces éléments en saillie étant avantageusement constitués par des bandelettes espacées les unes des autres et de forme carrée ou rectangulaire, ces bandelettes présentant une longueur de contact avec le gel d'environ 1 à environ 200 mm, notamment d'environ 1 à environ 40 mm, et étant espacées les unes des autres d'une distance au moins égale à environ 0,5 mm.
   L'invention concerne aussi un dispositif dans lequel chaque élément en saillie présente une longueur de contact avec le gel d'environ 1 mm à environ 200 mm, de préférence d'environ 1 mm à environ 40 mm, selon laquelle l'échantillon biologique est déposé sur le gel.
   L'invention concerne également un dispositif selon lequel la membrane poreuse et/ou les éléments en saillie sont constitués d'un matériau hydrophobe, contenant un agent mouillant de nature et en quantité telles qu'il ne dénature pas les composants contenus dans l'échantillon à analyser, cet agent mouillant étant en quantité suffisante pour que l'échantillon puisse être déposé en quantité suffisante sur un des éléments en saillie et en quantité inférieure à celle à partir de laquelle l'échantillon biologique ne peut plus être concentré sur l'extrémité en saillie, l'agent mouillant étant constitué avantageusement par de la glycérine du 1-3 butanediol ou des agents tensioactifs non chargés tel que Triton X-100®, Tween®, avantageusement à des concentrations d'environ 0.001 % à environ 10%.

L'invention concerne un procédé de dépôt d'un ou plusieurs échantillons biologiques sur une plaque d'électrophorèse, notamment un gel d'électrophorèse, caractérisé en ce que
- l'on dépose des échantillons biologiques sur un ou plusieurs éléments en saillie d'un dispositif pour l'application d'un échantillon biologique selon l'une quelconque des revendications 1 à 26, dans des conditions telles que lesdits éléments en saillie sont à saturation de liquide
- on met les éléments en saillie de la membrane poreuse dont une partie est éventuellement fixée sur un support de rigidification, en contact avec la plaque d'électrophorèse, pour faire diffuser l'échantillon à partir des éléments en saillie jusque sur la plaque d'électrophorèse et le déposer ainsi sur ladite plaque.

Selon le procédé ci-dessus, on fixe éventuellement une partie au moins de la susdite membrane poreuse contre des moyens de rigidification, notamment un support de rigidification. De préférence, la diffusion des échantillons biologiques à partir de l'extrémité des éléments en saillie vers la membrane poreuse est évitée, à l'aide de moyens d'humidification des éléments en saillie, ces moyens d'humidification comprenant un liquide d'humidification qui, par suite de l'évaporation du liquide au niveau de l'échantillon biologique, crée un flux de la membrane poreuse vers l'extrémité des éléments en saillie et entraîne les échantillons biologiques vers l'extrémité des éléments en saillie non engagée dans la membrane poreuse et qui concentre l'échantillon biologique à cette extrémité, ces moyens d'humidification comprenant par exemple un matériau spongieux fixé de façon amovible ou non sur la membrane ou sur les moyens de rigidification ou un réservoir fixé de façon amovible ou non sur les susdits moyens de rigidification.

Lorsqu'on humidifie, l'humidification doit être suffisante pour que, d'une part, toute la surface de la membrane poreuse et, d'autre part, la surface des éléments en saillie libre de l'échantillon biologique soit saturée en liquide d'humidification.

On peut éviter la diffusion des échantillons à partir des extrémités des éléments en saillie vers la membrane poreuse, avant ou après la fixation d'une partie des éléments en saillie de la membrane poreuse avec un support de rigidification.

Lorsqu'on humidifie avant le dépôt de l'échantillon biologique, il est nécessaire que la partie des extrémités des éléments en saillie destinée à recevoir les échantillons biologiques ne soit pas saturée en liquide d'humidification, pour pouvoir déposer l'échantillon biologique.

Selon un autre mode de réalisation du procédé de l'invention, on provoque la diffusion des échantillons biologiques et leur concentration vers l'extrémité des éléments en saillie, en créant un flux du liquide d'humidification vers l'extrémité des éléments en saillie sur lesquels sont déposés les échantillons biologiques, par exemple par évaporation du liquide de l'échantillon biologique, ou en accélérant cette évaporation et le flux, par exemple par ventilation d'air à une température inférieure ou égale à 40°C.

L'invention concerne également un procédé de dépôt non suivi de migration électrophorétique, tel que le "cross-dot" (dépôts croisés) ou un procédé d'immunofixation.

Dans le cas du cross-dot, on opère comme suit :
- on effectue le dépôt conformément à ce qui a été dit précédemment, sur une plaque, d'un échantillon biologique à l'aide des éléments en saillie, ce dépôt n'étant pas suivi d'électrophorèse,
- puis, dans une direction sensiblement perpendiculaire, on effectue le dépôt d'un réactif croisant le dépôt ci-dessus,
- on laisse incuber,
- et on révèle le résultat de la réaction échantillon biologique-réactif éventuellement formée.
Dans le cas de l'immunofixation, on opère comme suit :
- on dépose un échantillon biologique comme indiqué ci-dessus,
- on laisse la migration électrophorétique se produire,
- et lorsque la migration est terminée, on effectue le dépôt d'un réactif dans une direction sensiblement perpendiculaire au premier dépôt, sur une distance couvrant l'ensemble de la migration électrophorétique,
- on laisse incuber,
- puis on révèle le résultat de la réaction échantillon biologique-réactif éventuellement formée.

### DESCRIPTION DES FIGURES :

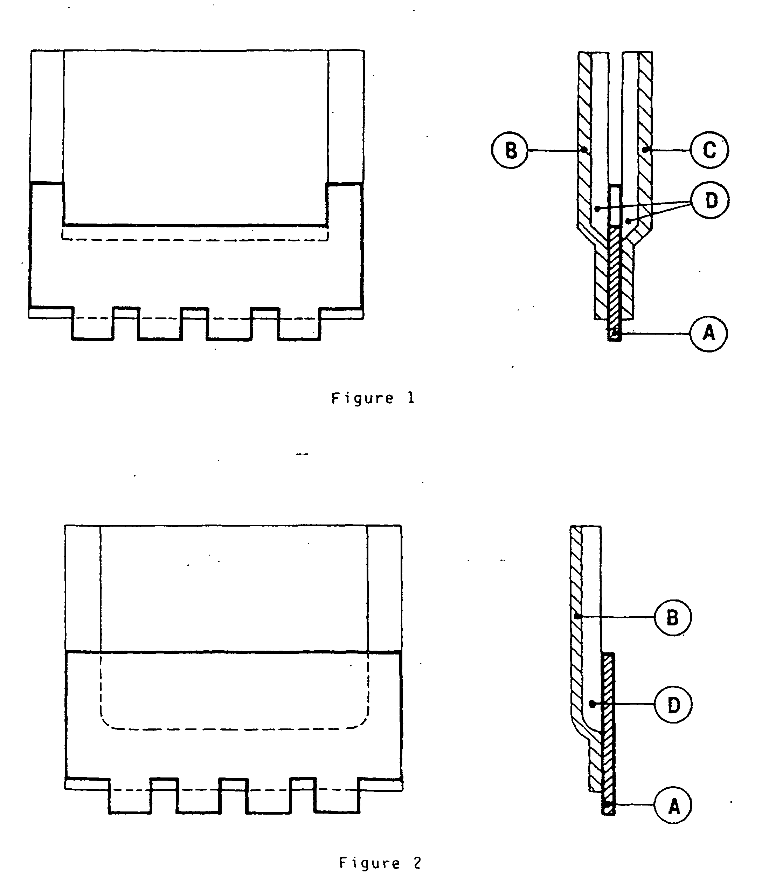

La Figure 1 représente une vue en plan et en coupe d'un dispositif de l'invention comportant une membrane (A) plane poreuse de forme rectangulaire et dans laquelle l'un des bords comporte des éléments en saillie de forme rectangulaire, et le bord de la membrane opposé aux éléments en saillie comporte au voisinage de chacun des côtés perpendiculaires aux susdits bords une patte en saillie, ce qui donne à ce côté de la membrane une forme de U comportant une partie linéaire horizontale bordée de deux pattes. La membrane est insérée entre les deux éléments (B et C) d'un support rigide, qui sont, par exemple, encollés (pour assurer l'étanchéité entre le support de rigidification et la membrane poreuse) sur la zone où vient s'appliquer la membrane poreuse, et qui, au voisinage de la partie linéaire horizontale, s'évasent, mais restent plaqués le long des deux pattes de la membrane poreuse et dans le prolongement de ces pattes.
   L'espace entre le renflement de chacun des éléments du support et la membrane forme un réservoir (D).
   La vue en coupe représente la section du dispositif selon un axe perpendiculaire au bord de la membrane comportant les éléments en saillie et situé sensiblement au milieu d'un élément en saillie de la membrane.
La Figure 2 représente une vue en plan et en coupe d'un dispositif de l'invention comportant une membrane (A) plane poreuse, de forme rectangulaire dans laquelle l'un des bords comporte des éléments en saillie rectangulaires, cette membrane plane étant rigidifiée par un support (B), par exemple encollé (pour assurer l'étanchéité entre le support de rigidification et la membrane poreuse) sur la zone où s'applique la membrane poreuse, et qui présente une partie évasée par rapport à la membrane; l'espace formé entre la membrane et cette partie évasée sert de réservoir éventuel (D).

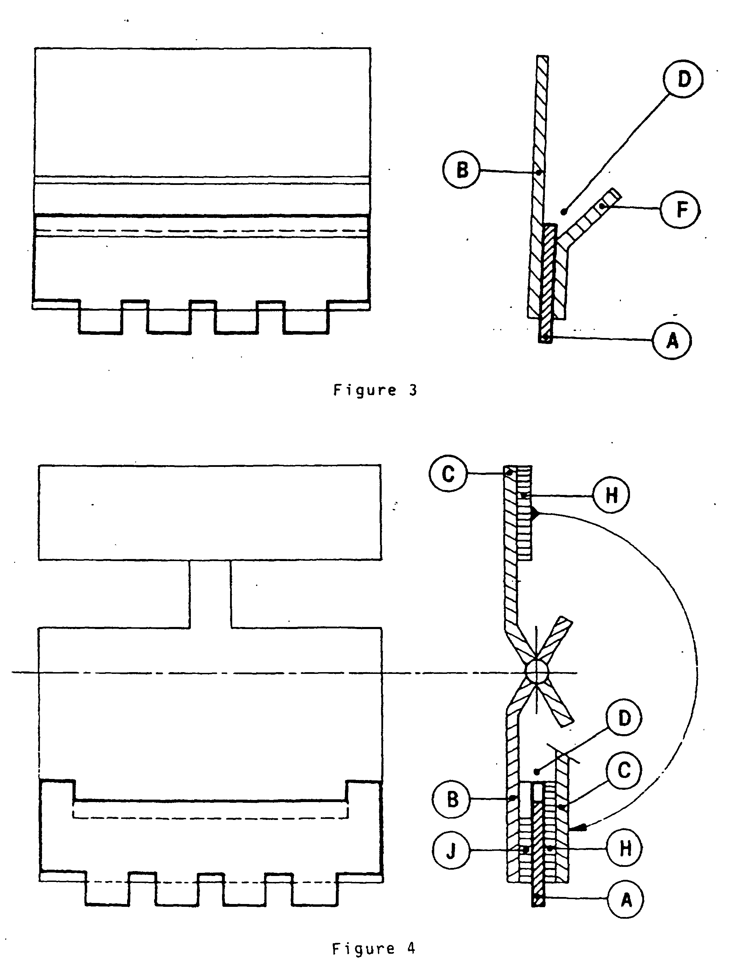

La Figure 3 représente une vue en plan et en coupe d'un dispositif de l'invention comportant une membrane (A) plane poreuse, de forme rectangulaire dans laquelle l'un des bords comporte des éléments en saillie rectangulaires. Cette membrane est appliquée sur un support (B), par exemple encollé (pour assurer l'étanchéité entre le support de rigidification et la membrane poreuse) sur la zone où s'applique la membrane poreuse. Une feuille (F) de matériau souple et hydrophobe, par exemple papier, est appliquée sur la surface de la membrane non appliquée au support. Cette feuille au voisinage du bord supérieur de la membrane s'évase et l'espace formé entre le support et la partie qui s'évase de la feuille de matériau forme le réservoir (D).
La Figure 4 représente une vue en plan et en coupe d'un dispositif de l'invention comportant une membrane (A) ayant sensiblement la forme de celle décrite dans la Figure 1 appliquée contre un matériau aimanté souple (J) qui a sensiblement les dimensions de la membrane, lequel matériau aimanté souple (J) est lui-même appliqué contre l'un des deux éléments (B) d'un support rigide.
   L'élément (B) du support est articulé dans la mesure où avec l'autre élément (C) du support, il est susceptible de former une pince. L'élément (B) du support a une forme rectangulaire. L'élément (C) du support a la forme d'une bande, laquelle est articulée sensiblement au milieu du côté supérieur de l'élément (B) du support. Sur l'élément (C) du support est fixé un matériau aimanté souple (H) qui a sensiblement les mêmes dimensions que la membrane.
   La vue en plan et en coupe représente la pince ouverte.
   Sur la vue en coupe, on a également représenté la pince en position fermée par l'intermédiaire de la flèche circulaire. Lorsque la pince est fermée, la membrane (A) est alors insérée et maintenue entre les deux matériaux (H) et (J), lesquels sont respectivement appliqués contre les éléments (B) et (C) du support.

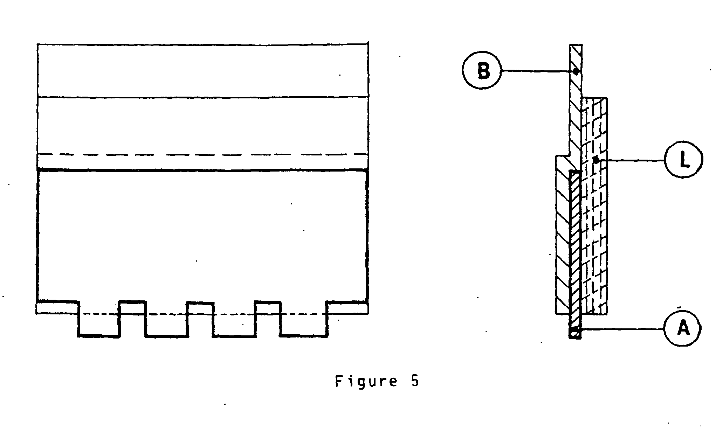

La Figure 5 représente une vue en plan et en coupe d'un dispositif de l'invention comportant une membrane plane poreuse (A) fixée sur un support (B). Sur la surface de la membrane non appliquée au support se trouve un matériau spongieux (L), par exemple en éponge, papier filtre ou gel (par exemple agarose ou acrylamide).

L'invention est illustrée par les exemples ci-après, qui n'ont aucune valeur limitative et qui font référence aux figures qui, pour des raisons de schématisation, comportent quatre éléments en saillie, étant entendu que les dispositifs utilisés dans les exemples, lorsqu'ils font référence à une figure particulière, peuvent comporter un nombre d'éléments en saillie différent de quatre (par exemple un, six ou huit).

### EXEMPLE 1 : PROTEINOGRAMME D'UN SERUM AVEC COLORATION AU ROUGE PONCEAU :

On utilise une membrane poreuse en acétate de cellulose, ayant une dimension de pores de 8 µm et une épaisseur de 140 µm, comportant six éléments en saillie de 4,0 mm espacés de 2 mm. Cette membrane est fixée sur un support rigide (conformément à la représentation de la Figure 1).

On dépose au moyen d'une micropipette sur chaque élément en saillie et à proximité de leur extrémité, 1 µl de sérum pur.

Le réservoir (D) constitué des parties préencollées sur la membrane poreuse A est alors chargé avec la pipette, de 400 µl de liquide d'humidification, constituée par une solution aqueuse à 0.5% de polyacrylamide de masse molaire 5×10⁶. On attend 5 minutes à l'air libre, avant d'appliquer pendant une minute le dispositif sur un gel destiné à l'analyse des protéines.

Après migration, le gel est fixé, séché et coloré au rouge Ponceau selon les techniques habituelles.

### EXEMPLE 2 : PROTEINOGRAMME D'UN SERUM AVEC COLORATION AU NOIR AMIDE :

On opère comme indiqué à l'exemple 1, si ce n'est que le temps d'attente est réduit à deux minutes et le temps d'application à 30 secondes.

Après migration, le gel est fixé, séché et coloré au noir amide selon les techniques habituelles.

### EXEMPLE 3 : PROTEINOGRAMME D'UN SERUM AVEC COLORATION AU VIOLET ACIDE :

On opère comme indiqué à l'exemple 1 si ce n'est que le temps d'attente est réduit à deux minutes et le temps d'application à quinze secondes.

Après migration, le gel est fixé, séché et coloré au violet acide selon les techniques habituelles.

### EXEMPLE 4 : PROTEINOGRAMME HAUTE RESOLUTION D'UN SERUM:

On utilise une membrane poreuse en acétate de cellulose, ayant une dimension de pores de 1,2 µm et une épaisseur de 100 µm comportant quatre éléments en saillie de 7 mm, espacés de 3 mm, cette membrane étant fixée sur un support rigide (cf. Figure 5).

Au moyen d'une micropipette, on dépose sur un parafilm et selon une ligne droite quatre gouttes de 5 µl espacées de 10 mm, des quatre échantillons à analyser.

Les éléments en saillie sont mis simultanément en contact par leur extrémité avec les différents échantillons jusqu'à ce que le front de liquide des échantillons se soit absorbé dans les éléments en saillie, jusqu'à une hauteur de 3 mm à partir des extrémités.

Le matériau spongieux est alors imprégné au moyen d'une pipette par 1 ml de liquide d'humidification constitué d'une solution aqueuse à 10% de Dextran de masse molaire 5×10⁵.

On attend 5 minutes avant d'appliquer le dispositif pendant 30 secondes sur un gel destiné à l'analyse haute résolution des protéines.

Après migration, fixation et séchage, le gel est coloré au violet acide selon les techniques habituelles.

### EXEMPLE 5 : PROTEINOGRAMME D'UN SERUM COLORE AU NOIR AMIDE :

On utilise une membrane poreuse en acétate de cellulose ayant une taille de pore 0,45 µm et une épaisseur de 130 µm imprégnée de 2% de 1-3 butanediol et comportant huit éléments en saillie de 3 mm espacés de 1,5 mm, fixé sur un support rigide (conformément à la représentation de la Figure 2).

Au moyen d'une micropipette, on dépose à proximité de l'extrémité de chaque élément en saillie 1 µl de chaque échantillon.

Le réservoir (D) constitué d'une part par le support rigide (B) et d'autre part par la membrane poreuse (A) est chargé avec 200 µl d'eau physiologique.

On attend 2 minutes à l'air libre avant d'appliquer le dispositif pendant 1 minute sur un gel destiné à l'analyse des protéines.

Après migration, le gel est fixé sous ventilation d'air chaud à 70°C et coloré au noir amide selon les techniques habituelles.

### EXEMPLE 6 : PROTEINOGRAMME D'UN SERUM COLORE AU ROUGE PONCEAU:

On utilise une membrane poreuse en nylon ayant une taille de pore de 0,45 µm et une épaisseur de 120 µm, comportant six éléments en saillie de 4 mm, espacés de 2 mm, laquelle membrane est maintenue sur un support de rigidificàtion (conformément à la représentation de la Figure 4).

Au moyen d'une micropipette, on dépose à proximité de l'extrémité de chaque élément en saillie 1 µl de chaque échantillon.

Le réservoir (D) constitué, d'une part, par les éléments (B) et (C) du support rigide et, d'autre part, par les éléments magnétiques souples (J) et (H), est chargé au moyen d'une pipette par 100 µl d'eau.

L'ensemble de dispositif et notamment l'extrémité des éléments en saillie dépassant du système de rigidification est placé pendant 2 minutes sous une ventilation d'air, à température ambiante, avant d'être appliqué pendant 1 minute sur un gel d'agarose destiné à la séparation des protéines.

Après migration, le gel est fixé, séché et coloré au rouge Ponceau selon les techniques habituelles.

### EXEMPLE 7 : LIPIDOGRAMME D'UN SERUM SUR GEL D'AGAROSE: COLORATION AU NOIR SOUDAN :

On utilise une membrane poreuse en acétate de cellulose, ayant une taille de pore de 8 µm et une épaisseur de 140 µm, comportant six éléments en saillie de 4 mm espacés de 2 mm, laquelle membrane est fixée sur support de rigidification (conformément à la représentation de la Figure 3).

Au moyen d'une micropipette, on dépose à proximité de l'extrémité des éléments en saillie 1 µl de chaque échantillon.

Le réservoir constitué d'une part par le support rigide (B) et le volet souple (F), ouvert à environ 45° est chargé au moyen d'une pipette de 100 µl de liquide d'humidification constitué d'une solution à 1% d'hydroxyéthylcellulose de poids moléculaire 5.10⁵.

On attend 10 minutes à l'air libre, avant d'appliquer le dispositif pendant 2 minutes sur un gel, destiné à la séparation des lipoprotéines.

Après séchage sous ventilation d'air chaud, le gel est coloré au noir Soudan selon les techniques habituelles.

### EXEMPLE 8 : ANALYSE DES ISOENZYMES DE LA LACTICODESHYDROGENASE (LDH) :

On opère comme indiqué à l'exemple 6, si ce n'est que le temps d'attente est réduit à 6 minutes.

Le dispositif est alors appliqué pendant 2 minutes sur un gel d'agarose destiné à la séparation des isoenzymes de la LDH.

Après migration, le gel est immédiatement révélé au moyen des substrats habituels selon les techniques classiques.

### EXEMPLE 9 : MISE EN EVIDENCE ET IDENTIFICATION DES PARAPROTEINES PAR IMMUNOFIXATION :

On utilise une membrane poreuse en acétate de cellulose ayant une taille de pore de 8 µm et une épaisseur de 140 µm comportant un seul élément en saillie de 40 mm fixé sur support de rigidification (conformément à la représentation de la Figure 3).

Au moyen d'une micropipette, on dépose à proximité de l'extrémité de l'élément en saillie et sur toute la longueur de cet élément l'échantillon préalablement dilué au cinquième dans l'eau physiologique de telle sorte qu'il s'étale sur une hauteur d'environ 5 mm à partir de l'extrémité de l'élément en saillie.

Le réservoir constitué d'une part par le support rigide (B) et le volet souple (F), ouvert à environ 45° est chargé de 100 µl de liquide d'humidification constitué d'une solution aqueuse à 0,25% de polyacrylamide de masse molaire 5.10⁶.

On attend 2 minutes avant l'application qui dure 30 secondes sur un gel destiné aux analyses d'immunofixation.

Après migration, le gel est traité selon les techniques habituelles d'immunofixation.

### EXEMPLE 10 : MISE EN EVIDENCE ET IDENTIFICATION DES PARAPROTEINES PAR IMMUNOFIXATION :

On opère comme indiqué à l'exemple 8, jusqu'à la fin de la migration.

On remplace le dépôt des antisérums effectués précédemment avec un masque, par des dépôts effectués au moyen du même dispositif que celui utilisé pour le dépôt de l'échantillon à savoir :
on utilise cinq membranes poreuses en acétate de cellulose de 8 µm épaisseur 140 µm comportant chacune un seul élément en saillie de 40 mm, lequel est fixé sur support de rigidification (conformément à la représentation de la Figure 3).

Au moyen d'une micropipette, on dépose sur chacune des cinq membranes poreuses à proximité de l'extrémité des éléments en saillie et sur une hauteur d'environ 5 mm chacun des antisérums anti-IgG, anti-IgA, anti-IgM, anti-kappa et anti-lambda.

Chacun des cinq réservoirs est chargé de 100 µl de liquide d'humidification constitué d'une solution à 0,25 % de polyacrylamide de masse molaire 5×10⁶.

On attend 2 minutes avant l'application (pendant 2 minutes) simultanée des cinq dispositifs, perpendiculairement au dépôt initial de l'échantillon, et à 5 mm les uns des autres.

On incube pendant 10 minutes et on poursuit comme à l'exemple 8.

## Revendications

1. Dispositif pour l'application d'échantillons biologiques sur une plaque d'électrophorèse, comprenant :
- un ou plusieurs éléments plans en matériau poreux dans lequel ledit échantillon biologique peut diffuser, dénommés ci-après "éléments en saillie", ces éléments plan étant découpés dans le prolongement du plan et sur le bord d'une membrane plane poreuse, espacés les uns des autres, la partie non engagée dans la membrane poreuse des éléments en saillie comportant une extrémité libre et les éléments en saillie étant tels qu'ils ont tous au moins un point de ladite extrémité libre, susceptible d'être mis en contact avec la surface plane de la plaque d'électrophorèse afin de déposer sur ladite plaque, par diffusion,un ou plusieurs échantillons biologiques, chaque échantillon biologique étant préalablement déposé sur un des éléments en saillie, ces différents points étant susceptibles d'être mis simultanément en contact avec la surface de ladite plaque selon un alignement, lorsque la susdite membrane poreuse est disposée dans un plan incliné ou perpendiculaire par rapport à la surface de la susdite plaque,
- des moyens d'humidification des éléments en saillie, fixés de façon réversible ou non à la susdite membrane poreuse.

2. Dispositif selon la revendication 1, **caractérisé en ce que** la membrane poreuse et les éléments en saillie ont une épaisseur d'environ 50 µm à environ 200 µm.

3. Dispositif selon la revendication 2, **caractérisé en ce que** la membrane poreuse et les éléments en saillie ont une épaisseur d'environ 100 à environ 150 µm.

4. Dispositif selon l'une quelconque des revendications 1 à 3, dans lequel la membrane poreuse a une forme quadrilatérale.

5. Dispositif selon la revendication 4 **caractérisé en ce que** l'extrémité libre des éléments en saillie est constituée par des polygones tels que des triangles, des trapèzes, des rectangles, des carrés, des portions de disque ou des portions d'éllipse.

6. Dispositif selon la revendication 4 **caractérisé en ce que** les extrémités libres des éléments en saillie présentent une longueur de contact avec le gel d'environ 1 à 200 mm, et sont espacées les unes des autres d'une distance au moins égale à 0,5 mm.

7. Dispositif selon l'une quelconque des revendications 3 à 6, **caractérisé en ce que** les moyens d'humidification sont constitués par un matériau susceptible d'être imprégné d'un liquide d'humidification et fixé de façon réversible ou non sur la membrane poreuse, au-dessus du voisinage du front de chaque échantillon biologique déposé sur chaque élément en saillie.

8. Dispositif selon l'une quelconque des revendications 1 à 7, dans lequel la membrane poreuse et les éléments en saillie sont constitués en matériau hydrophile.

9. Dispositif selon la revendication 8, **caractérisé en ce que** le matériau poreux hydrophile est choisi parmi la cellulose ou ses dérivés, ou la cellulose régénérée.

10. Dispositif selon la revendication 9, **caractérisé en ce que** le matériau poreux hydrophile est choisi parmi les esters de cellulose, ou les esters mixtes de cellulose.

11. Dispositif selon la revendication 10, **caractérisé en ce que** le matériau poreux hydrophile est choisi parmi l'acétate de cellulose, le propionate de cellulose ou le nitrate de cellulose.

12. Dispositif selon l'une quelconque des revendications 1 à 7, **caractérisé en ce que** le matériau est un matériau hydrophobe.

13. Dispositif selon l'une quelconque des revendications 1 à 7, **caractérisé en ce que** la membrane poreuse est constituée par le fluorure de polyvinylidène, le polysulfone ou le polysulfone modifié.

14. Dispositif selon l'une quelconque des revendications 1 à 7, **caractérisé en ce que** la membrane poreuse est constituée de nylon.

15. Dispositif selon l'une quelconque des revendications 1 à 14, comportant des moyens de rigidification de la membrane poreuse, la forme ou les dimensions des moyens de rigidification étant compatibles avec celles de la membrane poreuse et des éléments en saillie, de façon à permettre le maintien d'une partie au moins de la membrane poreuse par les moyens de rigidification dans des conditions telles que les moyens de rigidification ne gênent pas la mise en contact des éléments en saillie solidaires de la membrane poreuse avec la surface plane de la plaque d'électrophorèse et le dépôt de l'échantillon biologique sur la plaque d'électrophorèse,

16. Dispositif selon la revendication 15, **caractérisé en ce que** les moyens de rigidification comportent des moyens d'humidification des parties en saillie.

17. Dispositif selon les revendications 1 à 16 dont les moyens d'humidification sont constitués
• dans le cas de la membrane poreuse, par un matériau susceptible d'être imprégné d'un liquide d'humidification, tel qu'un matériau spongieux fixé de façon réversible ou non sur ladite membrane,
• dans le cas des moyens de rigidification,
par un réservoir intégré dans lesdits moyens de rigidification ou amovible par rapport auxdits moyens, ou résultant d'un espace formé par la configuration d'une partie des moyens de rigidification et d'une partie de la membrane poreuse, au voisinage du bord de la membrane poreuse opposé à celui qui comporte les éléments en saillie, ledit réservoir contenant une solution d'humidification, et des moyens d'étanchéité entre lui-même et la membrane poreuse, ou
par un matériau susceptible d'être imprégné d'un liquide d'humidification, tel qu'un matériau spongieux, amovible ou non par rapport aux moyens de rigidification.

18. Dispositif selon la revendication 17, **caractérisé en ce que** le liquide d'humidification est une solution aqueuse contenant de la glycérine à raison de 0 à 50% en volume ou est une solution saline choisie parmi une solution tampon phosphate 0,15 M, tampon trisglycine 0,15 M, tampon citrate 0,15 M, ou une solution contenant NaCL 0,15 M.

19. Dispositif selon la revendication 17 ou 18 dans lequel le liquide d'humidification contient avantageusement un polymère permettant de réduire les phénomènes de diffusion en retour de l'échantillon biologique vers la partie de la membrane poreuse opposée aux éléments en saillie, lequel polymère est hydrosoluble et a une masse molaire élevée, de 2X10⁵ à 10⁷.

20. Dispositif selon la revendication 19, **caractérisé en ce que** le polymère est choisi parmi l'hydroxyéthylcellulose, le dextran, le polyacrylamide à des concentrations suffisantes pour que le front de l'échantillon déposé sur les éléments en saillie soit sensiblement rectiligne et à des concentrations inférieures à celle au-delà de laquelle le liquide d'humidification ne progresse plus en raison de sa viscosité.

21. Dispositif selon l'une quelconque des revendications 1 à 11 ou 15 à 20, dans lequel la membrane poreuse est une feuille d'acétate de cellulose, dans laquelle les extrémités libres des éléments en saillie sont espacées les unes des autres, situées sur l'un des côtés de la membrane, et les moyens de rigidification sont constitués par un support de rigidification comportant un réservoir intégré audit support.

22. Dispositif selon l'une quelconque des revendications 1 à 20, comportant
- une membrane poreuse constituée par une feuille de papier, dans laquelle les extrémités libres des éléments en saillie sont situées sur l'un des côtés de la membrane poreuse et espacées les unes des autres,
- un support de rigidification,
- un matériau spongieux susceptible d'être fixé de façon amovible sur la membrane poreuse ou sur le support de ridigification.

23. Dispositif selon les revendications 1 à 22, dans lequel le volume du dépôt d'un échantillon biologique sur un élément en saillie est de 0,05×10⁻² à 1×10 ⁻² µl/mm par µ d'épaisseur du matériau poreux pour un taux de porosité du matériau poreux de 50% à 90%, et le volume du dépôt de l'échantillon biologique sur la plaque d'électrophorèse est suffisant pour la détection des composants dans un échantillon et inférieur à une valeur au-delà de laquelle la résolution de la détection est perdue.

24. Dispositif selon les revendications 1 à 23, dans lequel la membrane contient un agent mouillant.

25. Dispositif selon la revendication 24, **caractérisé en ce que** la membrane poreuse et les éléments en saillie sont constitués par un matériau hydrophobe contenant un agent mouillant de nature et en quantité telles qu'il ne dénature pas les composants contenus dans l'échantillon à analyser, cet agent mouillant étant en quantité suffisante pour que l'échantillon puisse être déposé en quantité suffisante sur un des éléments en saillie et en quantité inférieure à celle à partir de laquelle l'échantillon biologique ne peut plus être concentré sur l'extrémité en saillie.

26. Dispositif selon la revendication 24 ou 25, **caractérisé en ce que** l'agent mouillant est choisi parmi la glycérine, le 1,3-butanediol ou des agents tensioactifs non chargés tel que Triton X-100®, Tween® à des concentrations d'environ 0.001% à environ 10%.

27. Procédé de dépôt d'un ou plusieurs échantillons biologiques sur une plaque d'électrophorèse , notamment gel d'électrophorèse, comprenant les étapes suivantes:
- on dépose des échantillons biologiques sur un ou plusieurs éléments en saillie d'un dispositif pour l'application d'un échantillon biologique selon l'une quelconque des revendications 1 à 26, dans des conditions telles que lesdits éléments en saillie sont à saturation de liquide,
- on met les éléments en saillie de la membrane en contact avec la plaque d'électrophorèse, dans des conditions permettant la diffusion de l'échantillon à partir des éléments en saillie jusque sur la plaque d'électrophorèse et le déposer ainsi sur ladite plaque.

28. Procédé selon la revendication 27 dans lequel une partie au moins de la membrane poreuse est fixée contre des moyens de rigidification.

29. Procédé selon la revendication 27 ou 28, dans lequel la diffusion des échantillons biologiques à partir de l'extrémité des éléments en saillie vers la membrane poreuse est évitée, à l'aide de moyens d'humidification des éléments en saillie, ces moyens d'humidification comprenant un liquide d'humidification qui, par suite de l'évaporation du liquide au niveau de l'échantillon biologique, crée un flux de la membrane poreuse vers l'extrémité des éléments en saillie et entraîne les échantillons biologiques vers l'extrémité des éléments en saillie non engagée dans la membrane poreuse et qui concentre l'échantillon biologique à cette extrémité.

30. Procédé selon la revendication 29, dans lequel les moyens d'humidification du dispositif comprenant un matériau spongieux fixé de façon amovible ou non sur la membrane ou sur les moyens de rigidification ou un réservoir fixé de façon amovible ou non sur les susdits moyens de rigidification.

31. Procédé selon la revendication 29, dans lequel on évite la diffusion des échantillons à partir des extrémités des éléments en saillie vers la membrane poreuse, avant la fixation d'une partie des éléments en saillie de la membrane poreuse avec un support de rigidification.

32. Procédé selon la revendication 29, dans lequel on évite la diffusion des échantillons à partir des extrémités des éléments en saillie vers la membrane poreuse, après la fixation d'une partie des éléments en saillie de la membrane poreuse avec un support de rigidification.

33. Procédé selon l'une quelconque des revendications 29 à 32, dans lequel on provoque la diffusion des échantillons biologiques et leur concentration vers l'extrémité des éléments en saillie, en créant un flux du liquide d'humidification, par exemple par évaporation du liquide de l'échantillon biologique, ou en accélérant cette évaporation et le flux, par exemple par ventilation d'air à une température inférieure ou égale à 40°C.

## Patentansprüche

1. Vorrichtung zum Aufbringen von biologischen Proben auf eine Elektrophoreseplatte, umfassend:
- ein oder mehrere ebene Elemente aus porösem Material, inf denen die biologische Probe diffundieren kann, die nachfolgend als "vorstehende Elemente" bezeichnet werden, wobei diese ebenen Elemente in der Verlängerung der Ebene und am Rand einer ebenen porösen Membran geschnitten sind, die voneinander beabstandet sind, wobei der nicht an der porösen Membran eingreifende Teil der vorstehenden Elemente ein freies Ende aufweist und die vorstehenden Elemente derart sind, daß sie alle mindestens einen Punkt des freien Endes aufweisen, der geeignet ist zum Inkontaktbringen mit der ebenen Oberfläche der Elektrophoreseplatte, um durch Diffusion eine oder mehrere biologische Proben auf die Platte aufzugeben, wobei jede biologische Probe zuvor auf eines der vorstehenden Elemente aufgegeben wurde, wobei diese verschiedenen Punkte gleichzeitig mit der Oberfläche der Platte in einer Ausrichtung in Kontakt gebracht werden können, wenn die genannte poröse Membran in einer Ebene angeordnet ist, die in Bezug auf die Oberfläche der Platte geneigt oder senkrecht dazu ist,
- Mittel zum Befeuchten der vorstehenden Elemente die reversibel oder nicht reversibel auf der porösen Membran befestigt sind.

2. Vorrichtung nach Anspruch 1, **dadurch gekennzeichnet, daß** die poröse Membran und die vorstehenden Elemente eine Dicke von ungefähr 50 µm bis ungefähr 200 µm aufweisen.

3. Vorrichtung nach Anspruch 2, **dadurch gekennzeichnet, daß** die poröse Membran und die vorstehenden Elemente eine Dicke von ungefähr 100 µm bis ungefähr 150 µm aufweisen.

4. Vorrichtung nach einem der Ansprüche 1 bis 3, bei der die poröse Membran eine vierseitige Form aufweist.

5. Vorrichtung nach Anspruch 4, **dadurch gekennzeichnet, daß** das freie Ende der vorstehenden Elemente durch Polygone gebildet ist, wie Dreiecke, Trapeze, Rechtecke, Quadrate, Kreissegmente oder Ellipsensegmente.

6. Vorrichtung nach Anspruch 4, **dadurch gekennzeichnet, daß** die freien Enden der vorstehenden Elemente eine Kontaktlänge mit dem Gel von ungefähr 1 bis 200 mm aufweisen, und voneinander durch einen Abstand von mindestens gleich 0,5 mm getrennt sind.

7. Vorrichtung nach einem der Ansprüche 3 bis 6, **dadurch gekennzeichnet, daß** die Mittel zum Befeuchten aus einem Material gebildet sind, das mit einer Befeuchtungsflüssigkeit imprägniert werden kann und reversibel oder nicht reversibel auf der porösen Membran befestigt sind, über dem Bereich der Front jeder biologischen Probe, die auf jedem vorstehenden Element aufgegeben wurde.

8. Vorrichtung nach einem der Ansprüche 1 bis 7, bei der die poröse Membran und die vorstehenden Elemente aus einem hydrophilen Material gebildet sind.

9. Vorrichtung nach Anspruch 8, **dadurch gekennzeichnet, daß** das hydrophile poröse Material ausgewählt ist aus Cellulose oder seinen Derivaten oder regenerierter Cellulose.

10. Vorrichtung nach Anspruch 9, **dadurch gekennzeichnet, daß** das hydrophile poröse Material ausgewählt ist aus Celluloseestern oder gemischten Celluloseestern.

11. Vorrichtung nach Anspruch 10, **dadurch gekennzeichnet, daß** das hydrophile poröse Material ausgewählt ist aus Celluloseacetat, Cellulosepropionat oder Cellulosenitrat.

12. Vorrichtung nach einem der Ansprüche 1 bis 7, **dadurch gekennzeichnet, daß** das Material ein hydrophobes Material ist.

13. Vorrichtung nach einem der Ansprüche 1 bis 7, **dadurch gekennzeichnet, daß** die poröse Membran aus Polyvinylidenfluorid, Polysulfon oder modifiziertem Polysulfon gebildet ist.

14. Vorrichtung nach einem der Ansprüche 1 bis 7, **dadurch gekennzeichnet, daß** die poröse Membran aus Nylon gebildet ist.

15. Vorrichtung nach einem der Ansprüche 1 bis 14, umfassend Versteifungsmittel für die poröse Membran, wobei die Form oder die Abmessungen der Versteifungsmittel mit denen der porösen Membran und der vorstehenden Elemente kompatibel ist, derart, daß es möglich ist, mindestens einen Teil der porösen Membran durch die Versteifungsmittel unter solchen Bedingungen zu halten, daß die Versteifungsmittel das Inkontaktbringen der vorstehenden Elemente in Verbindung mit der porösen Membran mit der ebenen Elektrophoreseplatte und das Aufgeben der biologischen Probe auf die Elektrophoreseplatte nicht behindern.

16. Vorrichtung nach Anspruch 15, **dadurch gekennzeichnet, daß** die Versteifungsmittel Mittel zum Befeuchten der vorstehenden Teile umfassen.

17. Vorrichtung nach einem der Ansprüche 1 bis 16, deren Mittel zum Befeuchten gebildet sind:
- im Falle der porösen Membran aus einem Material, das mit einer Befeuchtungsflüssigkeit imprägniert werden kann, wie einem schwammartigen Material, das reversibel oder nicht reversibel auf der Membran befestigt ist,
- im Falle der Versteifungsmittel,
durch ein Reservoir, das in den Versteifungsmitteln integriert ist oder in Bezug auf die Mittel auswechselbar ist, oder sich aus einem durch die Konfiguration eines Teils der Versteifungsmittel und eines Teils der porösen Membran gebildeten Raum ergibt, im Bereich des Randes der porösen Membran gegenüberliegend zu dem, der die vorstehenden Elemente trägt, wobei das Reservoir eine Befeuchtungslösung enthält, und
Dichtungsmittel zwischen sich und der porösen Membran, oder durch ein Material, das mit einer Befeuchtungsflüssigkeit imprägniert werden kann, wie einem schwammartigen Material, das an den Versteifungsmitteln auswechselbar ist oder nicht.

18. Vorrichtung nach Anspruch 17, **dadurch gekennzeichnet, daß** die Befeuchtungsflüssigkeit eine wässrige Lösung ist, die Glycerin in einer Menge von 0 bis 50 Volumen-% enthält oder eine Salzlösung ist, die ausgewählt ist aus einer Lösung von 0,15 M Phosphatpuffer, 0,15 M Trisglycinpuffer, 0,15 M Citratpuffer oder einer Lösung, die 0,15 M NaCl enthält.

19. Vorrichtung nach Anspruch 17 oder 18, in der die Befeuchtungsflüssigkeit bevorzugt ein Polymer enthält, das es ermöglicht, die Rückdiffusionsphänomene der biologischen Probe zum Teil der porösen Membran gegenüber den vorstehenden Elementen zu reduzieren, welches Polymer wasserlöslich ist und eine erhöhte Molmasse von 2 × 10⁵ bis 10⁷ aufweist.

20. Vorrichtung nach Anspruch 19, **dadurch gekennzeichnet, daß** das Polymer ausgewählt ist aus Hydroxyethylcellulose, Dextran, Polyacrylamid in ausreichenden Konzentrationen, daß die Front der auf den vorstehenden Elementen aufgegebenen Probe im Wesentlichen geradlinig ist und in Konzentrationen, unter jenen, bei denen die Befeuchtungsflüssigkeit aufgrund der Viskosität nicht mehr vorankommt.

21. Vorrichtung nach einem der Ansprüche 1 bis 11 oder 15 bis 20, bei der die poröse Membran ein Blatt aus Celluloseacetat ist, bei dem die freien Enden der vorstehenden Elemente voneinander in einem Abstand angeordnet sind, die auf einer der Seiten der Membran gelegen sind, und die Versteifungsmittel aus einem Versteifungsträger gebildet sind, der ein integriertes Reservoir im Träger umfasst.

22. Vorrichtung nach einem der Ansprüche 1 bis 20, umfassend:
- eine poröse Membran gebildet aus einem Blatt Papier, bei dem die freien Enden der vorstehenden Elemente auf einer der Seiten der porösen Membran gelegen sind und voneinander durch einen Abstand getrennt sind,
- einen Versteifungsträger,
- eine schwammartiges Material, das auswechselbar auf der porösen Membran oder dem Versteifungsträger befestigt sein kann.

23. Vorrichtung nach einem der Ansprüche 1 bis 22, bei der das Aufgabevolumen der biologischen Probe auf ein vorstehendes Element von 0,05 × 10⁻² bis 1 × 10⁻² µl/mm pro µm der Dicke des porösen Materials beträgt bei einem Porositätsgrad des porösen Materials von 50 % bis 90 %, und das Aufgabevolumen der biologischen Probe auf die Elektrophoreseplatte ausreichend ist für die Erfassung von Bestandteilen in einer Probe und unter einem Wert, ab dem die Auflösung der Erfassung verloren ist.

24. Vorrichtung nach einem der Ansprüche 1 bis 23, bei der die Membran eine Benetzungssubstanz enthält.

25. Vorrichtung nach Anspruch 24, **dadurch gekennzeichnet, daß** die poröse Membran und die vorstehenden Elemente aus einem hydrophoben Material gebildet sind, das ein Benetzungsmittel in der Art und Menge enthält, daß es die in der zu analysierenden Probe enthaltenen Bestandteile nicht denaturiert, wobei dieses Benetzungsmittel in einer ausreichenden Menge vorhanden ist, daß die Probe in ausreichender Menge auf eines der vorstehenden Elemente aufgegeben werden kann und in einer Menge unter der, ab der die biologische Probe nicht auf dem vorstehenden Ende konzentriert werden kann.

26. Vorrichtung nach Anspruch 24 oder 25, **dadurch gekennzeichnet, daß** das Benetzungsmittel ausgewählt ist aus Glycerin, 1,3-Butandiol oder oberflächenaktiven Stoffen wie Triton X-100®, Tween® in Konzentrationen von ungefähr 0,001 % bis ungefähr 10 %.

27. Verfahren zum Aufgeben einer oder mehrerer biologischer Proben auf eine Elektrophoreseplatte, insbesondere zur Gelelektrophorese, umfassend die folgenden Schritte:
- Aufbringen von biologischen Proben auf eines oder mehrere vorstehende Elemente einer Vorrichtung zum Aufbringen von biologischen Proben nach einem der Ansprüche 1 bis 26, unter Bedingungen, daß die vorstehenden Elemente mit Flüssigkeit gesättigt sind,
- Inkontaktbringen der vorstehenden Elemente der Membran mit der Elektrophoreseplatte unter Bedingungen, die die Diffusion der Probe ausgehend von den vorstehenden Elementen bis auf die Elektrophoreseplatte erlauben, und sie so auf die Platte aufgeben.

28. Verfahren nach Anspruch 27, bei dem mindestens ein Teil der porösen Membran gegen Versteifungsmittel befestigt wird.

29. Verfahren nach Anspruch 27 oder 28, bei dem die Diffusion der biologischen Proben ausgehend vom Ende der vorstehenden Elemente zur porösen Membran mit Hilfe von Befeuchtungsmitteln der vorstehenden Elemente vermieden wird, wobei diese Befeuchtungsmittel eine Befeuchtungsflüssigkeit umfassen, die als Folge der Verdampfung der Flüssigkeit bei der biologischen Probe einen Fluss in der porösen Membran zum Ende der vorstehenden Elemente ausbildet und die biologischen Proben zum Ende der vorstehenden Elemente schleppt, das nicht an der porösen Membran eingreift und was die biologische Probe an diesem Ende konzentriert.

30. Verfahren nach Anspruch 29, bei dem die Befeuchtungsmittel der Vorrichtung ein schwammartiges Material umfassen, das auswechselbar oder nicht auswechselbar an der Membran oder den Versteifungsmitteln oder einem auswechselbar oder nicht auswechselbar auf den Versteifungsmitteln befestigten Reservoir befestigt wird.

31. Verfahren nach Anspruch 29, bei dem die Diffusion der Proben ausgehend von den Enden der vorstehenden Elemente zur porösen Membran vor dem Befestigen eines Teils der vorstehenden Elemente der porösen Membran mit einem Versteifungsträger vermieden wird.

32. Verfahren nach Anspruch 29, bei dem die Diffusion der Proben ausgehend von den Enden der vorstehenden Elemente zur porösen Membran nach dem Befestigen eines Teils der vorstehenden Elemente der porösen Membran mit einem Versteifungsträger vermieden wird.

33. Verfahren nach einem der Ansprüche 29 bis 32, bei dem die Diffusion der biologischen Proben und ihre Konzentration zum Ende der vorstehenden Elemente durch Ausbilden eines Flusses der Befeuchtungsflüssigkeit hervorgerufen wird, zum Beispiel durch Verdampfen der Flüssigkeit der biologischen Probe oder durch Beschleunigen dieser Verdampfung und des Flusses, zum Beispiel durch Belüftung bei einer Temperatur unter oder gleich 40 °C

## Claims

1. A device for applying biological samples to an electrophoresis plate, comprising:
· one or more plane elements made of porous material in which said biological sample can diffuse, referred to below as "projecting elements", said plane elements being cut out to extend the plane at the edge of a plane porous membrane, being spaced apart from one another, the portion not engaged in the porous membrane of the projecting element having a free end, and the projecting elements being such that all of them have at least one point at said free end that is suitable for being put into contact with the plane surface of the electrophoresis plate in order to deposit on said plate one or more biological samples by diffusion, each biological sample being previously deposited on one of the projecting elements, said different points being suitable for being put simultaneously into contact with the surface of said plate in an alignment when the above-mentioned porous membrane is placed in a plane that is inclined or perpendicular relative to the surface of the above-mentioned plate; and
· moistener means for moistening the projecting elements, said means being fastened in optionally reversible manner to the above-mentioned porous membrane.

2. A device according to claim 1, **characterized in that** the porous membrane and the projecting elements are of a thickness of about 50 µm to about 200 µm.

3. A device according to claim 2, **characterized in that** the porous membrane and the projecting elements are of a thickness of about 100 µm to about 150 µm.

4. A device according to any one of claims 1 to 3, in which the porous membrane is in the form of a quadrilateral.

5. A device according to claim 4, **characterized in that** the free end of the projecting elements is constituted by polygons such as triangles, trapeziums, rectangles, squares, portions of a disk, or portions of an ellipse.

6. A device according to claim 4, **characterized in that** the free ends of the projecting elements present a contact length with the gel of about 1 mm to 200 mm, and are spaced apart from one another by a distance of not less than 0.5 mm.

7. A device according to any one of claims 3 to 6, **characterized in that** the moistener means are constituted by a material suitable for being impregnated with a moistening liquid and fastened in optionally reversible manner on the porous membrane, above the vicinity of the front of each biological sample deposited on each projecting element.

8. A device according to any one of claims 1 to 7, in which the porous membrane and the projecting elements are made of hydrophilic material.

9. A device according to claim 8, **characterized in that** the hydrophilic porous material is selected from cellulose or derivatives thereof, or regenerated cellulose.

10. A device according to claim 9, **characterized in that** the hydrophilic porous material is selected from cellulose esters, or from mixed cellulose esters.

11. A device according to claim 10, **characterized in that** the hydrophilic porous material is selected from cellulose acetate, cellulose propionate, or cellulose nitrate.

12. A device according to any one of claims 1 to 7, **characterized in that** the material is a hydrophobic material.

13. A device according to any one of claims 1 to 7, **characterized in that** the porous membrane is constituted by polyvinylidene fluoride, polysulfone, or modified polysulfone.

14. A device according to any one of claims 1 to 7, **characterized in that** the porous membrane is constituted of nylon.

15. A device according to any one of claims 1 to 14, including means for stiffening the porous membrane, the shape or dimensions of the stiffening means being compatible with those of the porous membrane and of the projecting elements, thus enabling at least a portion of the porous membrane to be held by the stiffening means under conditions such that the stiffening means do not impede the projecting elements secured to the porous membrane being put into contact with the plane surface of the electrophoresis plate and do not impede the biological sample being deposited on the electrophoresis plate.

16. A device according to claim 15, **characterized in that** the stiffener means include means for moistening the projecting portions.

17. A device according to claims 1 to 16, in which the moistener means are constituted:
· in the porous membrane case: by a material suitable for being impregnated with a moistening liquid, such as a sponge material fastened in optionally reversible manner on said membrane;
· in the stiffener means case:
by a tank integrated in said stiffener means or removable relative to said stiffener means or resulting from a space formed by the configuration of a portion of the stiffener means and a portion of the porous membrane, in the vicinity of the edge of the porous membrane opposite from its edge having the projecting elements, said tank containing a moistening solution, and sealing means between itself and the porous membrane, or
by a material suitable for being impregnated with a moistening liquid, such as a sponge material, optionally removable relative to the stiffener means.

18. A device according to claim 17, **characterized in that** the moistener liquid is an aqueous solution containing glycerine at a concentration of 0 to 50% by volume, or a saline solution selected from a 0.15 M phosphate buffer solution, a 0.15 M trisglycine buffer, a 0.15 M citrate buffer, or a solution containing 0.15 M NaCl.

19. A device according to claim 17 or claim 18, in which the moistener liquid advantageously contains a polymer serving to reduce phenomena of the biological sample diffusing back towards the portion of the porous membrane opposite from the projecting elements, which polymer is hydrosoluble and has a high molar weight of 2×10⁵ to 10⁷.

20. A device according to claim 19, **characterized in that** the polymer is selected from hydroxyethyl cellulose, dextran, and polyacrylamide, at concentrations that are sufficient to ensure that the front of the sample deposited on the projecting elements is substantially rectilinear and at concentrations that are below the concentration above which the moistening liquid no longer advances because of its viscosity.

21. A device according to any one of claims 1 to 11 or 15 to 20, in which the porous membrane is a sheet of cellulose acetate, in which the free ends of the projecting elements are spaced apart from one another, being situated on one of the sides of the membrane, and the stiffener means are constituted by a stiffener support including a tank integrated in said support.

22. A device according to any one of claims 1 to 20, comprising:
· a porous membrane constituted by a sheet of paper, in which the free ends of the projecting elements are situated on one of the sides of the porous membrane and are spaced apart from one another;
· a stiffener support;
· a sponge material suitable for being fastened in removable manner to the porous membrane or to the stiffener support.

23. A device according to claims 1 to 22, in which the volume of the biological sample deposited on a projecting element is 0.05×10-2⁻² ml/mm to 1×10-² ml/mm per µm of thickness of the porous material for a porous material having porosity of 50% to 90%, and the volume of biological sample deposited on the electrophoresis plate is sufficient to enable components in a sample to be detected and below a value beyond which detection resolution is lost.

24. A device according to claims 1 to 23, in which the membrane contains a wetting agent.

25. A device according to claim 24, **characterized in that** the porous membrane and the projecting elements are constituted by a hydrophobic material containing a wetting agent of a kind and in a quantity such that it does not denature the components contained in the sample to be analyzed, said wetting agent being in quantity sufficient for the samples to be capable of being deposited in sufficient quantity on one of the projecting elements, and in a quantity less than that beyond which the biological sample can no longer be concentrated on the projecting end.

26. A device according to claim 24 or claim 25, **characterized in that** the wetting agent is selected from glycerine, 1,3-butanediol, and non-charged tensio-active agents such as Triton X-100®, Tween@, at concentrations of about 0.001 % to about 10%.

27. A method of depositing one or more biological samples on an electrophoresis plate, in particular an electrophoresis gel, comprising the following steps:
· depositing biological samples on one or more projecting elements of a device for applying a biological sample according to any one of claims 1 to 26, under conditions that such projecting elements are saturated in liquid;
· the projecting elements of the membrane are put into contact with the electrophoresis plate under conditions enabling the sample to diffuse from the projecting elements to the electrophoresis plate, thereby depositing the samples on said plate.

28. A method according to claim 27, in which at least a portion of the porous membrane is fastened against stiffener means.

29. A method according to claim 27 or claim 28, in which the diffusion of the biological samples from the ends of the projecting elements towards the porous membrane is avoided by moistener means for moistening the projecting elements, said moistener means comprising a moistener liquid which, due to evaporation of the liquid at the biological sample sets up a flow from the porous membrane towards the ends of the projecting elements and entrains the biological samples towards the ends of the projecting elements that are not engaged in the porous membrane, and that concentrate the biological samples at said ends.

30. A method according to claim 29, in which the moistener means of the device comprise a sponge material fastened in optionally removable manner to the membrane or to the stiffener means or a tank fastened in optionally removable manner to said stiffener means.

31. A method according to claim 29, in which diffusion of the samples from the ends of the projecting elements towards the porous membrane is avoided, prior to fastening a portion of the projecting elements of the porous membrane to a stiffener support.

32. A method according to claim 29, in which the diffusion of samples from the ends of the projecting elements towards the porous membrane is avoided, after a portion of the projecting elements of the porous membrane have been fastened to a stiffening support.

33. A method according to any one of claims 29 to 32, in which the biological samples are caused to diffuse and become concentrated towards the ends of the projecting elements, by establishing a flow of moistening liquid, e.g. by evaporating the biological sample liquid, or by accelerating said evaporation and the flow, e.g. by blowing air at a temperature less than or equal to 40°C.
